# EUROPÄISCHE PATENTSCHRIFT

(11) **EP 0 492 757 B1**
(45) Veröffentlichungstag und Bekanntmachung des Hinweises auf die Patenterteilung: **02.11.1994**
(21) Anmeldenummer: 91250332.3
(22) Anmeldetag: 14.12.1991
(51) Int. Cl.: B65G 47/38, B65G 47/46

(54) **(Kipp-)Förderelement**
(Tipping) conveyor element
Elément de convoyeur basculant

(30) Priorität: 22.12.1990 DE 9017513 U
(43) Veröffentlichungstag der Anmeldung: 01.07.1992
(73) Patentinhaber: Bernhard Beumer Maschinenfabrik KG, D-59269 Beckum (DE)
(72) Erfinder: Pölling, Ludger, Dipl.-Ing., W-4724 Wadersloh (DE); Pelkmann, Gerhard, W-4720 Beckum (DE); Jäger, Hans, W-4724 Wadersloh (DE)
(74) Vertreter: Hoormann, Walter, Dr.-Ing.

(56) Entgegenhaltungen:
- DE-A- 2 755 147
- DE-A- 3 516 229
- GB-A- 2 117 341

## Beschreibung

Die vorliegende Erfindung betriff ein (Kipp-)Förderelement für einen in der Praxis auch kurz als Kippschalenförderer bezeichneten Stückgut-Stetigförderer, dessen angetriebener Förderstrang im wesentlichen aus einer Vielzahl gelenkig miteinander verbunder Förderelemente besteht, die jeweils an ihrem oberen Endabschnitt eine schalenförmige Tragplatte aufweisen, deren in Förderrichtung verlaufende Randabschnitte (= erste Tragplattenabschnitte) jeweils (d.h. also beiderseits der mittleren Symmetrielinie) relativ zu dem sich hieran nach innen (also zur Mitte hin) anschließenden benachbarten Abschnitt (= zweite Tragplattenabschnitte) nach oben abgewinkelt bzw. gekrümmt sind.

Derartige Kippschalenförderer werden heutzutage insbesondere als sog. Sorter beispielsweise für Paket- oder Gepäck-Verteileinrichtungen verwendet.

Einem Sorter werden die Stückgutteile an wenigstens einer Aufgabestelle (häufig jedoch an mehreren Aufgabestellen) von Hand oder vorzugsweise mit geeigneten Aufgabevorrichtungen so aufgegeben, daS sie jeweils auf der Tragfläche eines Förderelementes plaziert werden. Dabei läuft der Förderstrang i.a. in einer horizontalen Ebene um, kann jedoch z.B. auch schräg zur Horizontalen bzw. raumgängig verlaufen, wobei dann ggf. dafür Sorge zu tragen ist, daß die Stückgutteile nicht ungewollt von den Tragflächen heruntergleiten.

Die wesentliche Aufgabe eines Sorters besteht darin, die Stückgutteile jeweils i.a. an einer von mehreren seitlich zur Förderbahn angeordneten Abgabestationen gezielt abzugeben, um sie nach bestimmten Kriterien zu sortieren. Dieses kann bei Postpaketen bspw. eine Sortierung nach Postleitzahlen sein oder bei einem auf einem Flughafen eingesetzen Sorter eine Sortierung von aufgegebenen Gepäckstücken nach dem Flugziel, einer bestimmen Flugnummer od.dgl.

Aus der DE-A-14 31 736 ist eine Kippförderanlage bekannt, deren Förderelemente eine ebene, horizontale Tragplatte mit entsprechend ausgebildeter Tragfläche aufweisen. Derartige Förderelemente sind für eine Vielzahl von Stückgütern (völlig) ungeeignet, und zwar insbesondere (jedoch keineswegs ausschließlich) dann, wenn es sich um Stückgutteile wie bspw. und insbesondere zylindrische Zeichnungsrollen od.dgl. handelt, die nach ihrer Aufgabe auf ein (Kipp-)Förderelement mit ebener, horizontaler Tragplatte bzw. Tragfläche von einem Förderelement herabrollen würden.

Es sind daher auch bereits schalenförmige (Kipp-)Förderelemente bekanntgeworden (s. z.B. DE-B-2 037 380), deren die eigentliche Tragfäche bildender Boden nur im mittleren Bereich eben (und in der normalen Förderstellung - also nicht in der Kippstellung - horizontal) ausgebildet ist, während die sich hieran beiderseits anschließenden Randabschnitte unter einem Winkel von wenigen Grad nach oben abgewinkelt sind.

Auch diese vorbekannten Förderelemente eignen sich jedoch nicht für eine sichere Handhabung von Stückgutteilen wie bspw. und insbesondere zylindrischen Zeichnungsrollen od.dgl., weil sie an ihren beiden quer zur Förderichtung verlaufenden Rändern mit hochstehenden, flanschartigen Stegen versehen sind, so daß insbesondere dann dieselbe Problematik besteht, wenn die Zeichnungsrollen od.dgl. länger sind als die in Förderrichtung gemessene Länge eines Förderelementes.

Man hat daher auch bereits schalenförmige (Kipp-)Förderelemente ähnlicher Art vorgesehen (s. z.B. DE-A-1 431 845), die keine derartigen quer zur Förderrichtung verlaufenden Randstege aufweisen, doch ist auch bei diesen bekannten Förderelementen eine sichere Handhabung von Zeichnungsrollen od. dgl. nicht möglich, weil die Neigung der beiden symmetrisch zur Längsmittelachse ausgebildeten Tragplattenabschnitte nur wenige Grad beträgt, wie dieses in gleicher Weise für die Förderelemente gemäß der DE-A-30 50 102 gilt.

Aus der DE-C-36 02 861 ist ein (Kipp-)Förderelement der eingangs beschriebenen Gattung bekannt, bei dem also die in Förderrichtung verlaufenden Randabschnitte (erste Tragplattenabschnitte) jeweils relativ zu dem sich hieran nach innen bzw. zur Mitte hin anschließenden zweiten Tragplattenabschnitt nach oben abgewinkelt sind, wobei der ebene zweite Tragplattenabschnitt ähnlich wie bei dem Förderelement gemäß der bereits erwähnten DE-B-2 037 380 im nicht gekippten Transportzustand horizontal verläuft, jedoch an den quer zur Förderrichtung verlaufenden Rändern des Förderelementes keine hochstehenden Randstege vorgesehen sind.

Es hat sich zwar gezeigt, daß das aus der DE-C-36 02 861 bekannte (Kipp-)Förderelement den anderen zuvor beschriebenen Ausgestaltungen im Hinblick auf die hier in Rede stehende Problematik (weit) überlegen ist, doch löst auch dieses vorbekannte Förderelement dieses Problem noch nicht befriedigend.

Bisher sind bei mit derartigen Förderelementen ausgerüsteten und bspw./insbesondere in Post-Paket-Verteilanlagen eingesetzten Sortern die jeweils angefallenen (Zeichnungs-)Rollen od.dgl. von Hand sortiert oder aber per Handauflage quer auf ein deartiges schalenförmiges (Kipp-)Förderelement aufgelegt worden. Da derartige Zeichnungsrollen od.dgl. jedoch in aller Regel erheblich länger als die Tragplattenbreite der Förderelemente sind, haben Seitenwangen, Lichtschrankenhalterungen u.dgl. regelmäßig störend den Transportweg derartiger Rollen od.dgl. zum vorgesehenen Ziel in höchst nachteiliger Weise beeinflußt. Darüber hinaus kam es ersichtlich durch eine nicht definierte Schwerpunktlage zu vergleichbaren Problemen, wie sie bei den oben beschriebenen schalenförmigen (Kipp-)Förderelementen mit hochstehenden Randstegen vorhanden sind.

Selbst bei einer Aufgabe von Hand, bei der derartige Stückgutteile wie Zeichnungsrollen od.dgl. parallel zur Längsrichtung (in Förderrichtung gesehen) eines (Kipp-)Förderelementes aufgelegt wurden, kam es - obwohl die oben dargelegten Schwierigkeiten dabei ersichtlich erheblich zu reduzieren waren - aufgrund der nur leicht gewölbten Schalenneigung selbst dann nicht zu einer relativ kurzfristigen Beruhigung (genauer gesagt zu einer Beruhigung des aufgegebenen Stückgutteils der hier in Rede stehenden Art auf kurzer Strecke), was den Betriebsablauf nach wie vor in auf Dauer letztlich nicht akzeptabler Weise (z.T. erheblich) gestört hat.

Der vorliegenden Erfindung liegt demgemäß die Aufgabe zugrunde, ein (Kipp-)Förderelement der eingangs beschriebenen Gattung zu schaffen, welches sich insbesondere (auch) zur Aufnahme von zylindrischen Stückgutteilen wie Zeichnungsrollen u.dgl. eignet, und zwar auch dann, wenn diese länger als die Länge oder Breite eines (Kipp-)Förderelementes sind, wobei es nicht nur zu einer definierten und fixierten Lage derartiger Stückgutteile nach deren Aufgabe kommen soll, sondern dieses darüber hinaus auch auf relativ kurzer Strecke - gleichsam möglichst "momentan" - möglich sein soll.

Die Lösung dieser Aufgabe ist erfindungsgemäß dadurch gekennzeichnet, daß sich jeweils (d.h. also vorzugsweise beiderseits zur mittleren Symmetrielinie, obwohl sich diese Maßnahme auch bereits bei einseitiger Ausgestaltung gegenüber dem Stand der Technik Vorteile entfaltet) an einen zweiten Tragplattenabschnitt nach innen (also zur Mitte hin) ein dritter Tragplattenabschnitt anschließt, der relativ zu dem benachbarten zweiten Tragplattenabschnitt nach unten geneigt (bzw. gekrümmt) ausgebildet ist.

Um nicht nur überhaupt ("irgendwann") eine definierte bzw. fixierte Lage eines derartigen Stückgutteils auf einem Förderelement (ggf. auch mehreren aufeinander folgenden Förderelementen) zu erreichen, sondern diesen Zustand alsbald herbeiführen zu können, ist bevorzugt vorgesehen, daß auch die zweiten (beim Erfindungsgegenstand jeweils zwischen einem ersten und dritten Tragplattenabschnitt liegenden) Tragplattenabschnitte jeweils von außen nach innen zur Horizontalen nach unten geneigt (bzw. gekrümmt) sind, so daß bspw. eine auf die Tragplatte eines derartigen (Kipp-)Förderelementes aufgegegebene Zeichnungsrolle od.dgl. nach ihrer Aufgabe (mit i.w. parallel zur Förderrichtung verlaufender Längsachse) - je nach Aufgabestelle - über einen ersten Tragplattenabschnitt und den diesem unmittelbar benachbarten zweiten Tragplattenabschnitt in die durch die beiden dritten Tragplattenabschnitte gebildete, vorzugsweise V-förmige mittlere Mulde (schnell) einläuft und in dieser während des Transportes sicher formschlüssig gehalten wird.

Bei einer höchst bevorzugten Ausgestaltung der vorliegenden Erfindung ist die quer zur Förderrichtung gemessene Breite eines dritten Tragplattenabschnittes (vorzugsweise jeweils) im rückwärtigen Bereich der Tragplatte kleiner als im vorderen Bereich. Das hat - wie weiter unten noch anhand eines Ausführungsbeispiels weiter erläutert wird - zur Folge, daß eine Zeichnungsrolle od.dgl., die von einer Aufgabevorrichtung auf ein sich dieser näherndes (Kipp-)Förderelement aufgegeben wird, diese ersichtlich zunächst mit ihrem vorderen Abschnitt erreicht, der bei der Übergabe zwangsläufig sogleich über den gleichsam als Rampe wirkenden dritten Tragplattenabschnitt zur Mitte hin gelenkt wird, und zwar insbesondere dann, wenn - wie dieses bevorzugt vorgesehen ist - die Breite eines dritten Tragplattenabschnittes im (breiteren) vorderen Bereich so groß ist, daß am vorderen Randabschnitt der Tragplatte bzgl. des zweiten Tragplattenabschnittes allenfalls noch ein kurzer Stützbereich verbleibt, mit dem ggf. anders ausgebildete Stückgutteile zweckmäßig abzustützen sind.

Es ist für den zuständigen Fachmann ohne weiteres zu erkennen, daß der der vorliegenden Erfindung zugrundeliegende Erfindungsgedanke ersichtlich auch dann zu verwirklichen ist bzw. verwirklicht wird, wenn (beiderseits der in Förderrichtung verlaufenden Symmetrieachse eines Förderelementes) jeweils noch mehr als drei Tragplattenabschnitte verwirklicht werden, doch hat sich gezeigt, daß es einer derartigen (herstellungsmäßig komplizierteren) Ausgestaltung nicht bedarf, um die gestellte Aufgabe in hervorragender Weise lösen zu können. Dabei ist es für eine sichere formschlüssige Fixierung eines derartigen aufgegebenen Stückgutteils ersichtlich besonders vorteilhaft, wenn die den mittleren Bereich der Tragplatte bildenden spiegelsymmetrisch zueinander augebildeten Tragplattenabschnitte im wesentlichen V-förmig ausgebildet sind bzw. verlaufen, wobei der Öffnungswinkel des V bevorzugt ca. zwischen 60 und 135° liegt.

Bevorzugte Ausgestaltungen der vorliegenden Erfindung sind in den Unteransprüchen beschrieben. Die Erfindung ist nachstehend an Ausführungsbeispielen unter Bezugnahme auf eine Zeichnung weiter erläutert. Es zeigt:
- Fig. 1: eine in Förderrichtung gesehene, stirnseitige Ansicht auf eine schalenförmige Tragplatte eines erfindungsgemäßen (Kipp-)Förderelementes in Richtung des Pfeiles I in Fig. 2 gesehen;
- Fig. 2: eine Draufsicht auf das Förderelement gemäß Fig. 1;
- Fig. 3: eine Fig. 2 entsprechende Darstellung eines gegenüber den Fig. 1 und 2 modifizierten Förderelementes;
- Fig. 4: einen Schnitt durch das Förderelement gemäß Fig. 3 in Richtung der Schnittlinie IV-IV gesehen;

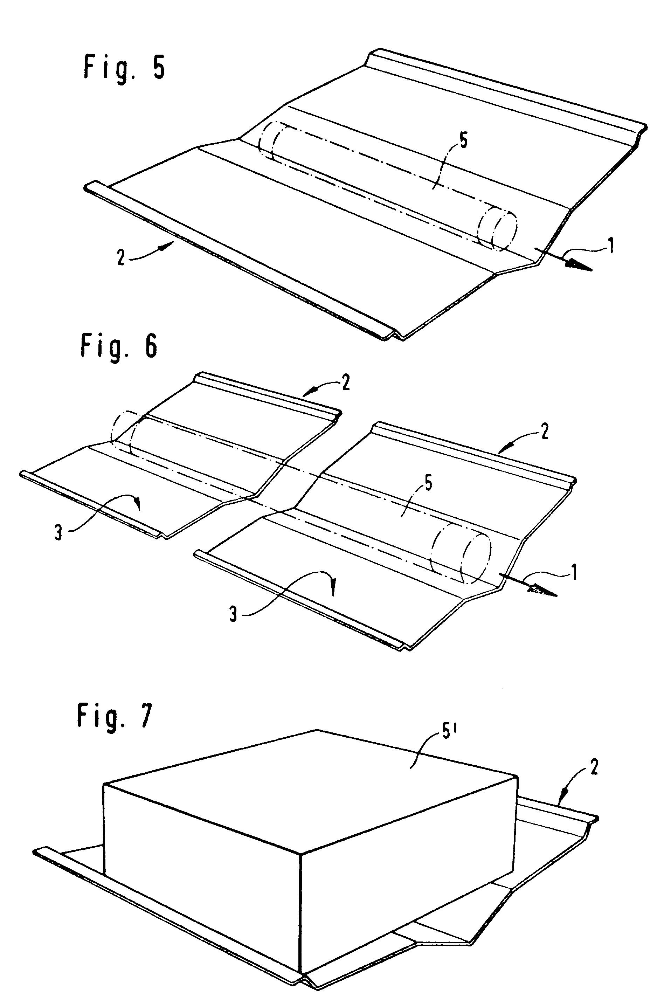

- Fig. 5: die Tragplatte eines im wesentlichen dem Förderelement gemäß den Fig. 1 und 2 entsprechenden Förderelementes in perspektivischer Darstellung mit einem auf das Förderelement (und damit dessen Tragplatte) aufgegebenen, zylindrischen Stückgutteils, dessen Länge kleiner ist als die in Förderrichtung gemessene Länge der Tragplatte;
- Fig. 6: eine Anordnung eines zylindrischen Stückgutteils, dessen Länge (erheblich) größer ist als die in Förderrichtung gemessene Länge der Tragplatte eines Förderelementes in einem auf zwei Förderelemente aufgegebenen Aufgabezustand; und
- Fig. 7: die Tragplatte eines Förderelementes gemäß den Fig. 1, 2 bzw. 5, 6 mit einem auf dem Förderelement angeordneten quaderförmigen Stückgutteil.

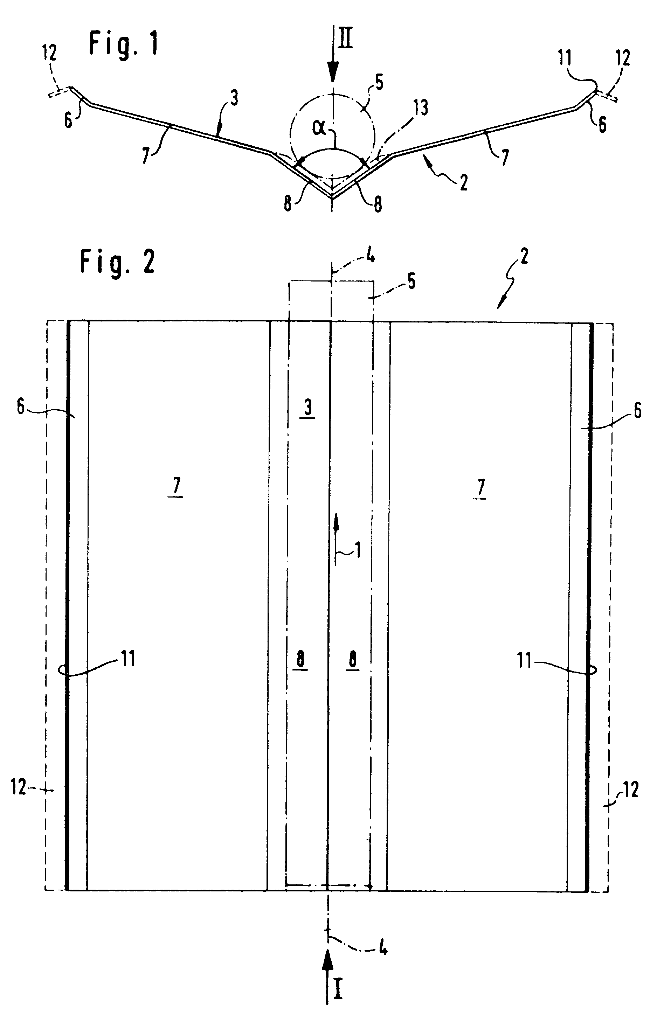

Die Fig. 1 und 2 zeigen in einer seitlichen Draufsicht in Richtung des die Förderricht angebenden Pfeils 1 ein (Kipp-) Förderelement 2 für einen als Kippschalenförderer ausgebildeten Stückgut-Stetigförderer, dessen (i.ü. nicht dargestellter) angetriebener Förderstrang im wesentlichen aus einer Vielzahl gelenkig miteinander verbundener Förderelemente 2 besteht, die jeweils an ihrem obigen Endabschnitt eine schalenförmige Tragplatte 3 aufweisen, deren in Förderrichtung 1 verlaufende Randabschnitte beiderseits der mittleren Symmetrielinie 4 relativ zur Horizontalen abgewinkelt sind, wie weiter unten im einzelnen beschrieben wird. Genauer gesagt zeigen die Fig. 1 und 2 die (etwas vereinfacht dargestellte) Tragplatte 3 eines erfindungsgemäßen (Kipp-) Förderelementes 2 sowie ein darauf angeordnetes, in strichpunktierten Linien angedeutetes zylindrisches Stückgutteil 5, bei dem es sich beispielsweise um eine Zeichnungsrolle handeln kann.

Insbesondere aus Fig. 1 ist erkennbar, daß die in Förderrichtung 1 verlaufenden (äußeren) Randabschnitte der Tragplatte 3, die vor- und nachstehend auch als erste Tragplattenabschnitte 6 bezeichnet sind, jeweils zu dem sich hieran nach innen bzw. zur Mitte hin anschließenden benachbarten Abschnitt, der vor- und nachstehend auch als zweiter Tragplattenabschnitt 7 bezeichnet ist, nach oben abgewinkelt sind.

Aus Fig. 1 ist weiterhin erkennbar, daß nicht nur die ersten Tragplattenabschnitte 6, 6, sondern auch die zweiten Tragplattenabschnitte 7, 7 jeweils von außen nach innen zur Horizontalen nach unten geneigt ausgebildet sind.

An jeden der beiden zweiten Tragplattenabschnitte 7 schließt sich nach innen (also zur Mitte hin) ein dritter Tragplattenabschnitt 8 an, der relativ zu dem benachbarten zweiten Tragplattenabschnitt 7 nach unten geneigt ist, wobei die beiden den mittleren Bereich der Tragplatte 3 bildenden, spiegelsymmetrisch angeordneten dritten Tragplattenabschnitte 8, 8 V-förmig ausgebildet sind und der V-Winkel α zwischen den beiden dritten Tragplattenabschnitten 8, 8 bei dem in den Fig. 1 und 2 dargestellten Ausführungsbeispiel 120° beträgt.

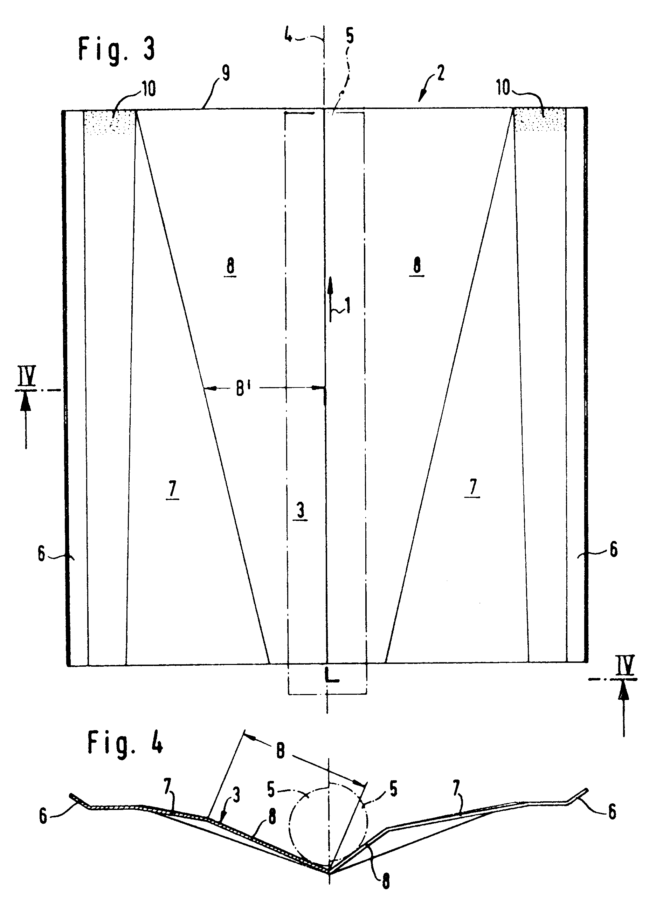

Bevor die Wirkungsweise des erfindungsgemäßen (Kipp-)Förderelementes 2 im einzelnen erläutert wird, sei zunächst die in den Fig. 3 und 4 dargestellte Variante erläutert. Dabei entspricht die Darstellung gemäß Fig. 3 der Darstellung gemäß Fig. 4 und zeigt mithin eine Draufsicht auf die Tragplatte 3 (gleiche oder gleichwirkende Teile sind mit den gleichen Bezugszeichen versehen wie bei der Ausführungsform gemäß den Fig. 1 und 2).

Der wesentliche Unterschied der Ausgestaltung gemäß Fig. 3 und 4 gegenüber der Ausgestaltung gemäß den Fig. 1 und 2 besteht darin, daß die quer zur Förderrichtung 1 gemessene Breite B (s. Fig. 4; in Fig. 3 ist der entsprechende Wert mit B' bezeichnet, da er die Projektion von B wiedergibt) der dritten Tragplattenabschnitte 8, 8 im vorderen Bereich (in Förderrichtung 1 gesehen) der Tragplatte 3 erheblich größer ist als im rückwärtigen Bereich (s. Fig. 3), wobei die Breite B vom rückwärtigen Bereich zum vorderen Bereich stetig (und zwar linear) zunimmt.

Dabei ist die Breite B der beiden dritten Tragplattenabschnitte 8, 8 im vorderen Bereich so groß, daß am vorderen Randabschnitt 9 der Tragplatte 3 jeweils bezüglich des zweiten Tragplattenabschnittes 7 nur ein kurzer Stützbereich 10 verbleibt, der in Fig. 3 gepunktet dargestellt ist.

Es sei noch darauf verwiesen, daß die ersten Tragplattenabschnitte 6, 6 ggf. an ihrem Außenrand 11 mit einem Versteifungsflansch 12 versehen sein können, wie dieses bei der Ausgetaltung gemäß den Fig. 1 und 2 mit strichpunktierten Linien angedeutet ist.

Weiterhin sei darauf verwiesen, daß es zweckmäßig sein kann, (wenigstens) die Innenseite der dritten Tragplattenabschnitte 8, 8 mit einem Reibbelag 13 zu versehen, wie dieses (der besseren Deutlichkeit halber ersichtlich übertrieben dick gezeichnet) in Fig. 1 angedeutet ist, während es i.a. zweckmäßig ist, die dem Stückgut zugekehrten Innenseiten der ersten Tragplattenabschnitte 6, 6 und insbesondere der zweiten Tragplattenabschnitte 7, 7 nicht mit einem relativ hohen Reibungsbeiwert zu versehen.

Wird ein zylindrisches Stückgutteil 5 beispielsweise und bevorzugt mittels einer Aufgabevorrichtung auf einen Sorter und damit (wenigstens) die Tragplatte 3 eines (Kipp-)Förderelementes 2 aufgegeben, so gelangt es zunächst auf einen zweiten Tragplattenabschnitt 7, rollt von diesem aufgrund der Neigung der zweiten Tragplattenabschnitte 7, 7 und damit der Schwerkraftwirkung alsbald zur Mitte und gelangt dabei in den von den beiden dritten Tragplattenabschnitten 8, 8 gebildeten mittleren V-förmigen Aufnahmebereich, in dem es sodann definiert und formschlüssig fixiert während des Transportes gehalten wird, wie dieses aus den Fig. 1 und 6 hervorgeht.

Wenn man - wie dieses in aller Regel wünschenswert ist - an einer alsbaldigen, nahezu spontanen "Beruhigung" des Stückgutteils 5 in der zuvor beschriebenen definierten Lage interessiert ist, so empfiehlt sich insbesondere eine Tragplatte 3 in einer Ausgestaltung gemäß den Fig. 3 und 4 bzw. einer ähnlichen Form, bei welcher das Stückgutteil 5 bei der Aufgabe mit seinem vorderen Endabschnitt unverzüglich auf einen rampenförmigen dritten Tragplattenabschnitt 8 gelangt (und demgemäß dort zur Mitte hin rollt), während der rückwärtige Endabschnitt des Stückgutteils 5 zunächst auf einen zweiten Tragplattenabschnitt 7 gelangt, dann aber beim Verlassen dieses Tragplattenabschnittes 7 und Erreichen der V-förmigen Mulde 8, 8 unverzüglich von dieser formschlüssig "gefangen" und gehalten wird, so daß das Stückgutteil 5 alsbald seine definierte, fixierte Lage im mittleren Bereich der Tragplatte 3 erreicht bzw. erzielt.

Der in Fig. 1 beispielhaft angedeutete Reibbelag 13 auf der Innenseite der dritten Tragplattenabschnitte 8, 8 kann insbesondere dann zweckmäßig sein, wenn es während des Transportes zu Beschleunigungen bzw. Verzögerungen der Förderelemente 2 kommen kann, die ggf. zu einer relativen Verschiebung von Stückgutteilen 5 auf den Tragplatten 3 führen können, falls der Reibbelag zwischen Tragplatte 3 und Stückgutteil 5 nicht hinreichend groß ist. Dabei hat sich gezeigt, daS ein relativ hoher Reibungsbeiwert im Bereich der V-förmigen Mulde 8, 8 für den Kippvorgang insbesondere dann völlig unschädlich ist, wenn dafür gesorgt wird, daß der Übergang des Reibbelages 13 zur Innenseite der zweiten Tragplattenabschnitte 7 stetig erfolgt, was ohne weiteres zu realisieren ist.

Fig. 6 zeigt in einer perspektivischen Darstellung die Anordnung eines zylindrischen Stückgutteils 5, dessen Länge erheblich länger ist als die in Förderrichtung 1 gemessene Länge einer Tragplatte 3, auf zwei aufeinander folgenden (Kipp-)Förderelementen 2 bzw. deren Tragplatten 3, 3.

Fig. 7 zeigt schließlich noch, daß die erfindungsgemäß ausgebildeten (Kipp-)Förderelemente 2 keineswegs etwa nur für zylindrische Stückgutteile 5 bestimmt und geeignet sind, sondern daß auf ihnen selbstverständlich auch bspw. quaderförmige Stückgutteile 5' in zweckmäßiger Weise transportiert werden können.

Insbesondere unter Bezugnahme auf die Ausgestaltung gemäß den Fig. 3 und 4 sei noch darauf verwiesen, daß die jeweils zwischen einem ersten Tragplattenabschnitt 6 und einem dritten Tragplattenabschnitt 8 liegenden zweiten Tragplattenabschnitte 7, 7 oder/und die dritten Tragplattenabschnitte 8, 8 selbst quer zur Längsrichtung (s. Förderrichtung 1) der Tragplatte 3 von außen nach innen nach unten abgeknickt bzw. gekrümmt ausgebildet sein können, wie dieses auch bereits bei der Ausgestaltung gemäß den Fig. 3 und 4 aus dem linken Teil der Darstellung von Fig. 4 erkennbar ist.

## Patentansprüche

1. (Kipp-)Förderelement für einen Stückgut-Stetigförderer, dessen angetriebener Förderstrang im wesentlichen aus einer Vielzahl gelenkig miteinander verbundener Förderelemente besteht, die jeweils in ihrem oberen Endabschnitt eine schalenförmige Tragßlatte aufweisen, deren in Förderrichtung verlaufende Randabschnitte (= erste Tragplattenabschnitte) vorzugsweise jeweils relativ zu dem sich hieran nach innen anschließenden Abschnitt (= zweite Tragplattenabschnitte) nach oben abgewinkelt bzw. gekrümmt sind, dadurch gekennzeichnet, daß sich jeweils an einen zweiten Tragplattenabschnitt (7) nach innen ein dritter Tragplattenabschnitt (8) anschließt, der relativ zu dem benachbarten zweiten Tragplattenabschnitt (7) nach unten geneigt bzw. gekrümmt ist.

2. Förderelement nach Anspruch 1, dadurch gekennzeichnet, daß die zweiten Tragplattenabschnitte (7, 7) jeweils von außen nach innen zur Horizontalen nach unten geneigt bzw. gekrümmt sind.

3. Förderelement nach Anspruch 1 oder 2, dadurch gekennzeichnet, daß die quer zur Förderrichtung (1) gemessene Breite (B) eines dritten Tragplattenabschnittes (8, 8) im vorderen Bereich der Tragplatte (3) größer ist als im rückwärtigen Bereich.

4. Förderelement nach Anspruch 3, dadurch gekennzeichnet, daß die Breite (B) eines dritten Tragplattenabschnittes (8, 8) vom rückwärtigen Bereich zum vorderen Bereich stetig zunimmt.

5. Förderelement nach Anspruch 4, dadurch gekennzeichnet, daß die Breite (B) eines dritten Tragplattenabschnittes (8, 8) vom rückwärtigen Bereich zum vorderen Bereich linear zunimmt.

6. Förderelement nach einem oder mehreren der Ansprüche 3 bis 5, dadurch gekennzeichnet, daß die Breite (B) eines dritten Tragplattenabschnittes (8, 8) im vorderen Bereich so groß ist, daß am vorderen Randabschnitt (9) der Tragplatte (3) jeweils bzgl. des zweiten Tragplattenabschnittes (7) allenfalls ein schmaler Schlitzbereich (10) verbleibt.

7. Förderelement nach einem oder mehreren der vorhergehenden Ansprüche, dadurch gekennzeichnet, daß die ersten Tragplattenabschnitte (6, 6) an ihrem Außenrand (11) mit einem Versteifungsflansch (12) versehen sind.

8. Förderelement nach einem oder mehreren der vorhergehenden Ansprüche, dadurch gekennzeichnet, daß die den mittleren Bereich der Tragplatte (3) bildenden, spiegelsymmetrisch ausgebildeten dritten Tragplattenabschnitte (8, 8) im wesentlichen V-förmig ausgebildet sind.

9. Förderelement nach Anspruch 8, dadurch gekennzeichnet, daß der zwischen den beiden dritten Tragplattenabschnitten (8, 8) gebildete Winkel ca. 60 bis 135° beträgt.

10. Förderelement nach Anspruch 9, dadurch gekennzeichnet, daß der zwischen den beiden dritten Tragplattenabschnitten (8, 8) liegende Winkel (α) ca. 90° beträgt.

11. Förderelement nach einem oder mehreren der vorhergehenden Ansprüche, dadurch gekennzeichnet, daß (wenigstens) die Innenseite der dritten Tragplattenabschnitte (8, 8) mit einem Reibbelag (13) versehen ist.

12. Förderelement nach einem oder mehreren der vorhergehenden Ansprüche, insbesondere nach Anspruch 3, dadurch gekennzeichnet, daß die jeweils zwischen einem ersten Tragplattenabschnitt (6) und einem dritten Tragplattenabschnitt (8) liegenden zweiten Tragplattenabschnitte (7, 7) quer zur Längsrichtung (1) der Tragplatte (3) von außen nach innen nach unten abgeknickt bzw. gekrümmt ausgebildet sind.

13. Förderelement nach einem oder mehreren der vorhergehenden Ansprüche, insbesondere nach Anspruch 12, dadurch gekennzeichnet, daß die dritten Tragplattenabschnitte (8, 8) quer zur Längsrichtung (1) der Traglatte (3) von außen nach innen nach unten abgeknickt bzw. gekrümmt ausgebildet sind.

## Claims

1. A (tilting) flight for a continuous conveyor for piece goods, the driven run of the conveyor mainly comprising a number of pivoted-together flights each having in their top end part a support tray or pan or the like whose edge parts extending in the conveying direction and hereinafter called first pan parts are preferably bent or curved upwards relatively to the parts, hereinafter called second pan parts, into which the first pan parts merge inwardly, characterised in that each second pan part (7) merges inwardly into a third pan part (8) which is inclined or curved downwardly relatively to the adjacent second pan part (7).

2. A flight according to claim 1, characterised in that the second pan parts (7, 7) are inclined or curved downwards from the horizontal from the outside towards the inside.

3. A flight according to claim 1 or 2, characterised in that the width (B) of a third pan part (8, 8) as measured transversely to the conveying direction (1) is greater at the front of the pan (3) than at the rear thereof.

4. A flight according to claim 3, characterised in that the width (B) of a third pan part (8, 8) increases continuously from rear to front.

5. A flight according to claim 4, characterised in that the width (B) of a third pan part (8, 8) increases linearly from rear to front.

6. A flight according to one or more of claims 3 to 5, characterised in that the width (B) of a third pan part (8, 8) at the front is such that at the most a narrow slot zone (10) remains in the front edge part (9) of the pan (3) relatively to the second pan part (7).

7. A flight according to one or more of the previous claims, characterised in that the first pan parts (6, 6) have a stiffening flange (12) on their outside edge (11).

8. A flight according to one or more of the previous claims, characterised in that the laterally inverted third pan parts (8, 8) forming the central zone of the pan (3) are substantially V-shaped.

9. A flight according to claim 8, characterised in that the angle formed between the two third pan parts (8, 8) is approximately 60 to 135°.

10. A flight according to claim 9, characterised in that the angle (α) between the two third pan parts (8, 8) is approximately 90°.

11. A flight according to one or more of the previous claims, characterised in that (at least) the inside of the third pan parts (8, 8) has a friction covering (13).

12. A flight according to any of the previous claims, more particularly claim 3, characterised in that each second pan part (7, 7) disposed between a first pan part (6) and a third pan part (8) is bent or curved downwards from the outside towards the inside transversely to pan length (1).

13. A flight according to any of the previous claims, more particularly claim 12, characterised in that the third pan parts (8, 8) are bent or curved downwards from the outside towards the inside transversely to pan length (1).

## Revendications

1. Elément de convoyage (basculant) destiné à un convoyeur continu d'objets isolés, dont la ligne de convoyage entraînée est constituée pour l'essentiel d'une pluralité d'éléments de convoyage qui sont reliés entre eux de manière articulée et qui comportent chacun, dans leur partie extrême supérieure, un plateau porteur en forme de coupelle dont les parties de bord s'étendant dans le sens de convoyage (= premières parties du plateau porteur) sont, de préférence chacune, coudées ou recourbées par rapport à la partie voisine (= deuxièmes parties du plateau porteur) qui les prolonge vers l'intérieur, caractérisé en ce que chacune des deuxièmes parties (7) du plateau porteur est prolongée vers l'intérieur par une troisième partie (8) de plateau porteur qui est inclinée ou incurvée vers le bas par rapport à la deuxième partie voisine (7) du plateau porteur.

2. Elément de convoyage selon la revendication 1, caractérisé en ce que chacune des deuxièmes parties (7, 7) du plateau porteur est inclinée ou incurvée vers le bas par rapport à l'horizontale en allant de l'extérieur vers l'intérieur.

3. Elément de convoyage selon la revendication 1 ou 2, caractérisé en ce que la largeur (B), mesurée transversalement au sens de convoyage (1), d'une troisième partie (8, 8) du plateau porteur est plus grande dans la zone avant du plateau porteur (3) que dans la zone arrière.

4. Elément de convoyage selon la revendication 3, caractérisé en ce que la largeur (B) d'une troisième partie (8, 8) du plateau porteur augmente de manière continue de la zone arrière vers la zone avant.

5. Elément de convoyage selon la revendication 4, caractérisé en ce que la largeur (B) d'une troisième partie (8, 8) du plateau porteur augmente de manière linéaire de la zone arrière vers la zone avant.

6. Elément de convoyage selon une ou plusieurs des revendications 3 à 5, caractérisé en ce que la largeur (B) d'une troisième partie (8, 8) du plateau porteur dans la zone avant est telle que, dans la partie de bord avant 9 du plateau porteur (3), il ne subsiste plus en tout état de cause, par rapport à la deuxième partie (7) du plateau porteur, qu'une zone étroite (10) formant fente.

7. Elément de convoyage selon une ou plusieurs des revendications précédentes, caractérisé en ce que les premières parties (6, 6) du plateau porteur comportent, à leur bord extérieur (11), un rebord raidisseur (12).

8. Elément de convoyage selon une ou plusieurs des revendications précédentes, caractérisé en ce que les troisièmes parties (8, 8) du plateau porteur qui forment la zone centrale du plateau porteur (3) et qui sont réalisées selon une symétrie en miroir sont conçues sensiblement en forme de V.

9. Elément de convoyage selon la revendication 8, caractérisé en ce que l'angle formé entre les deux troisièmes parties (8, 8) du plateau porteur est compris entre environ 60° et 135°.

10. Elément de convoyage selon la revendication 9, caractérisé en ce que l'angle (α) compris entre les deux troisièmes parties (8, 8) du plateau porteur est d'environ 90°.

11. Elément de convoyage selon une ou plusieurs des revendications précédentes, caractérisé en ce que (au moins) la face intérieure des troisièmes parties (8, 8) du plateau porteur est garnie d'un revêtement adhérent (13).

12. Elément de convoyage selon une ou plusieurs des revendications précédentes, en particulier selon la revendication 3, caractérisé en ce que les deuxièmes parties (7, 7) du plateau porteur, situées chacune entre une première partie (6) du plateau porteur et une troisième partie (8) du plateau porteur, sont coudées ou incurvées vers le bas, en allant de l'extérieur vers l'intérieur, transversalement au sens longitudinal (1) du plateau porteur (3).

13. Elément de convoyage selon une ou plusieurs des revendications précédentes, en particulier selon la revendication 12, caractérisé en ce que les troisièmes parties (8, 8) du plateau porteur sont coudées ou incurvées vers le bas, en allant de l'extérieur vers l'intérieur, transversalement au sens longitudinal (1) du plateau porteur (3).
